(19)

**Europäisches Patentamt**

**European Patent Office**

**Office européen des brevets**

(11) **EP 4 654 519 A1**

(12) **EUROPEAN PATENT APPLICATION**

(43) Date of publication:
26.11.2025 Bulletin 2025/48

(21) Application number: 24382559.3

(22) Date of filing: 24.05.2024

(51) International Patent Classification (IPC):
**H04L 9/00** *(2022.01)* **G06F 17/11** *(2006.01)*
**G06N 10/00** *(2022.01)*

(52) Cooperative Patent Classification (CPC):
**H04L 9/008; G06F 17/11; G06N 10/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Qcentroid Labs , S.L.**
**48001 Bilbao (Bizkaia) (ES)**

(72) Inventors:
• **Caruso, Mariano**
**Bilbao (BIZKAIA) (ES)**
• **Escanez-Exposito, Daniel**
**Bilbao (BIZKAIA) (ES)**
• **Caballero-Gil, Pino**
**Bilbao (BIZKAIA) (ES)**
• **Kuchkovsky, Carlos**
**Bilbao (BIZKAIA) (ES)**

(74) Representative: **Pons IP**
**Glorieta Rubén Darío 4**
**28010 Madrid (ES)**

(54) **SOLVING CRYPTOGRAPHY METHOD FOR OPTIMIZATION AND QUBO PROBLEMS SOLVER SYSTEM**

(57) A QUBO solving method for optimizing a function $f(\mathbf{x})$ defined by a matrix $\mathbf{Q}$ and a vector $\mathbf{p}$, comprising the steps of: encrypting the matrix $Q$ defining the function $f(\mathbf{x})$ to be optimized by using an encryption matrix P and/or an encryption vector k; sending the encrypted version of the matrix $\mathbf{Q'}$ to a QUBO solver; receiving an encrypted version of the solution to the QUBO problem $\mathbf{x'_*}$, obtained by optimization of the encrypted version of the function $f'(\mathbf{x'})$ performed by the QUBO solver; and decrypting the solution to the QUBO problem, thus obtaining $\mathbf{x_*}$.

**(Cont. next page)**

**FIG. 2**

**Description**

## OBJECT OF THE INVENTION

The invention is related to the field of optimization problems, more particularly to security and confidential issues solving Quadratic Unconstrained Binary Optimization (QUBO) problems by a hardware solver.

The object of the invention is a QUBO problems solving method for optimizing a function f(x) using a solver and protecting the transfer of information between a user and the hardware solver.

Other object of the invention is a QUBO problems solver system configured to optimize a function f(x) protecting the transfer of information between the user and the solver.

## BACKGROUND ART

Quadratic Unconstrained Binary programming, also known as Quadratic Unconstrained Binary Optimization (QUBO), is a central challenge in combinatorial optimization with a wide range of applications in various fields: theoretical computer science, economics, physics, machine learning, etc.

In their general formulation, these problems are computationally difficult, belonging to the NP-hard class. Its relevance extends to many classical problems of theoretical computing, such as max-cut, graph coloring, and set partitioning. In the field of machine learning, it is possible to map regression, classification and clustering models to QUBO-type problems.

Given the close relationship between the QUBO-type problems and Ising-type models, it is possible to attack their resolution in the context of adiabatic quantum computing and through a physical process known as quantum annealing, which highlights their importance in the development of quantum algorithms and applications.

In the world of optimization, Quadratic Unconstrained Binary Optimization (QUBO)have been established in a huge variety of fields: In the realm of finance, QUBO is applied to portfolio optimization, risk management, and algorithmic trading strategies. Economic models take advantage of this scheme to solve problems of resource allocation, market equilibrium, and cost minimization.

In the area of routing and logistics, it helps solve vehicle routing problems, facility location optimization, and supply chain management dilemmas.

Beyond these areas, QUBO transcends disciplinary boundaries, and is also very useful in areas as diverse as computational biology, telecommunications or healthcare.

For that reason, solving any of these problems poses significant challenges, especially when it comes to balancing computational efficiency with information security.

Both classical and quantum computing offer methods to address these problems but solving them through online platforms creates difficulties linked to privacy and the exposure of sensitive data.

When a problem is sent to a QUBO-type problem solver in the cloud or over internet, the data is shared with the server in question, and can be consulted and altered by the service providers. At this digital crossroads, the pressing need to safeguard the confidentiality of such intellectual enterprises emerges.

There is not in the art a solution which allows to add security to the transfer of information for the resolution of QUBO.

## DESCRIPTION OF THE INVENTION

The present invention discloses a solution that combines the power of cryptographic methods with QUBO troubleshooting, offering a safe and reliable way for the user to address these challenges.

Quadratic unconstrained binary optimization problems (QUBOs) are ubiquitous and can be solved via classical or quantum computing. Its resolution via the Internet entails a possible exposure of the information encoded in this optimization problem.

The present invention relates to a solving cryptography method configured to provide a layer of security on the user's side for solving a QUBO problem.

In this way, the invention addresses the security challenges associated with online solving of quadratic unconstrained binary optimization problems (QUBOs), providing a reliable framework for the secure resolution of these problems, both through classical and quantum computing.

In the method of the invention the user can solve a problem defined by data belonging to the user by using QUBO algorithms.

The QUBO problem could be defined as optimizing a function f(x) defined by a matrix Q and a vector p such that:

$$f(x) = \sum_{(i,j) \in I_n^2} Q_{ij}\, x_i\, x_j \; + \sum_{i \in I_n} p_i\, x_i$$

$$f(x) = x \cdot Qx$$

where $Q := Q + diag(p)$.

The method of the invention comprises the steps of:

a) encrypting the matrix $Q$ of the function f(**x**) to be optimized;
b) sending the encrypted version of the matrix **Q'** to a QUBO solver;
c) receiving an encrypted version of the solution to the QUBO problem $x'_*$, obtained by optimization of the encrypted version of the function f'(x') performed by the QUBO solver; and
d) decrypting the solution to the QUBO problem, thus obtaining $x_*$.

Thus, using the method of the invention the original problem could be encrypted before sending it to the QUBO solver. Said QUBO solver operates with the encrypted data and solves the problem without exposing the information of the original data. Then, the user can decrypt the solution locally.

In the context of the invention, it has been considered that a QUBO solver is a hardware solver, which preferably could be an adiabatic, quantic or issing solver.

In a first set of embodiments of the invention, the encryption of the function f(x) is performed by selecting an encryption matrix P configured perform a linear transformation such that

$$x = Px'$$

being x the unencrypted variable and x' the encrypted variable.

Thus, the encryption of the function would be:

$$f'(x') := f(Px')$$

being f'(x') the encrypted version of the function f(x) to be optimized, resulting:

$$f'(x') = x' \cdot Q'x'$$

The matrix **Q'** would result:

$$Q' = P^t Q P$$

In the decrypting step, $x_*$ is obtained by applying:

$$x_* = Px'_*$$

The encryption matrix P could be selected from:

- $P_{ij} = \delta_{jk}$ with an arbitrary k from among the n positions of the row, comprising in each row only one "1" and the rest "0"; and in each column only one "1" and the rest "0"; or
- a bistochastic matrix, wherein |**x**|=|**x'**|.

In a second set of embodiments, the encryption of the function f(x) is performed by selecting an encryption vector $k \in \{0,1\}^n$ such that

$$x = x' \oplus k$$

being x the unencrypted variable and x' the encrypted variable, $\oplus$ the binary sum given by the XOR operation,

Thus, the encryption of the function would be:

$$f'(x') := f(x' \oplus k)$$

being $f'(x')$ the encrypted version of the function f(x) to be optimized, resulting:

$$f'(x') = x' \cdot Q'x'$$

The matrix **Q'** would result:

$$Q' = \mathcal{C}(Q, k)$$

with:

$$\mathcal{C}(Q, k) = Q - 2(Q + Q^t)\, diag(k) + 4 diag(k)Q diag(k) + diag([Q + Q^t]k$$
$$- 2 diag(k) diag([Q + Q^t]k) diag(k)$$

In the decrypting step, $x_*$ is obtained by applying:

$$x_* = x'_* \oplus k$$

In this case, even if the encrypted matrix Q' is captured in transit to the QUBO solver it does not allow to obtain any information from the original matrix Q.

The two set of embodiments disclosed could be used as alternatives or in combination.

In another set of embodiments, the encryption matrix P and the encryption vector **k** could be used together, as:

$$T(x') = (Px') \oplus k$$

Also, the encryption with an encryption matrix P could be performed iteratively modifying the encryption matrix P at each step.

In the same way, the encryption with an encryption vector **k** could be performed iteratively modifying the encryption vector **k** at each step.

Even more, the encryption with an encryption matrix P and an encryption vector **k** could also be performed iteratively modifying the encryption matrix P and/or the encryption vector **k** at each step.

The invention also relates to a QUBO problems solver system comprising:

- a solver configured to solve QUBO problems by optimizing a function f'(x');
- a processing unit configured to perform the steps of the method of the invention defined, sending an encrypted version of the function to be optimized f'(x') to the solver and receiving an encrypted version of the solution to the QUBO problem $x'_*$.

The invention also relates to a computer program adapted to perform the steps of the method of the invention and to a computer readable storage medium comprising said computer program.

The invention could also be applicable to Ising models that can be treated with quantum computing. In such a case, the encryption and decryption operations are applied to the quantum states associated with the QUBO problem via Ising

## DESCRIPTION OF THE DRAWINGS

Figure 1 shows a QUBO solver system comprising a user sending a matrix Q via Internet to a QUBO-solver device that minimizes f(x).

Figure 2 shows a QUBO solver system comprising a user sending a matrix $Q' = P^tQP$ via Internet to a QUBO-solver device that minimizes f'(x'), sending an encrypted solution $x'_*$ , and the user decrypts the solution the using

$$x_* = Px'_*$$
.

Figure 3 shows a QUBO solver system comprising a user sending a matrix $Q' = \mathcal{C}(Q, k)$ via Internet to a QUBO-solver device that minimizes f'(x'), sending an encrypted solution $x'_*$ , and the user decrypts the solution the using $x = x' \oplus k$.

## PREFERRED EMBODIMENTS OF THE INVENTION

The invention relates to a QUBO problems solving method. The method of the invention allows to effectively secure the transmission of the QUBO problems to a solver for being solved in an encrypted form and decrypted locally by a user.

The QUBO problem could be defined in a general way as explained in the following. Let's start by defining the set of natural indices $I_n := \{1, \cdots n\}$. Then consider the space of binary n-tuples $B = \{0, 1\}^n$; a function $f : B \to \mathbb{R}$, constructed from a matrix Q: $Q \in \mathbb{R}^{n \times n}$ whose elements are $Q_{ij}$, a vector column $p \in \mathbb{R}^n$, whose elements are $p_i$ and a vector column $x \in B$ of components $x_i$, where $(i, j) \in I_n^2$.

Thus, the function f(x) would be:

$$f(x) = \sum_{(i,j) \in I_n^2} Q_{ij} x_i x_j + \sum_{i \in I_n} p_i x_i \qquad (1)$$

Since the aim is to optimize the function f(x), there is some arbitrariness in the definition of f unless an additive real constant. In other words, if $x_*$ is an optimal value for f(x) it will also be optimal for f(x) + c, $\forall c \in R$.

The QUBO optimization problem usually consists of minimizing f, i.e. finding a binary vector $x_* \in B$ such that $f(x_*) \leq f(x)$, $\forall x \in B$,

$$\underset{x \in B}{\operatorname{argmin}} f(x) \qquad (2)$$

Using the identity $x_i^2 = x_i, \forall i \in I_n$ it is possible to rewrite f so that its quadratic part contains only products $x_i x_j$ with $i \neq j$ and to transfer the term $x_i^2$ to the linear part of f.

$$f(x) = \sum_{\substack{(i,j) \in I_n^2 \\ i \neq j}} Q_{ij} x_i x_j + \sum_{i \in I_n} (Q_{ii} + p_i) x_i \qquad (3)$$

Assuming that

$$\sum_{i \in I_n} p_i x_i = p \cdot x$$

can also be written as

$$x \cdot diag(p)x$$

where diag(p) represents the matrix that has on its main diagonal the components of **p** and nulls the rest of its array elements.

This allows the linear terms to be transferred to the quadratic part of f to finally express it compactly as:

$$f(x) = x \cdot \mathcal{Q}x \qquad\qquad (4)$$

where $\mathcal{Q} := Q + diag(p)$.

It has to be noted that the $\mathcal{Q}$ matrix contains all the information of the QUBO problem to be solved.

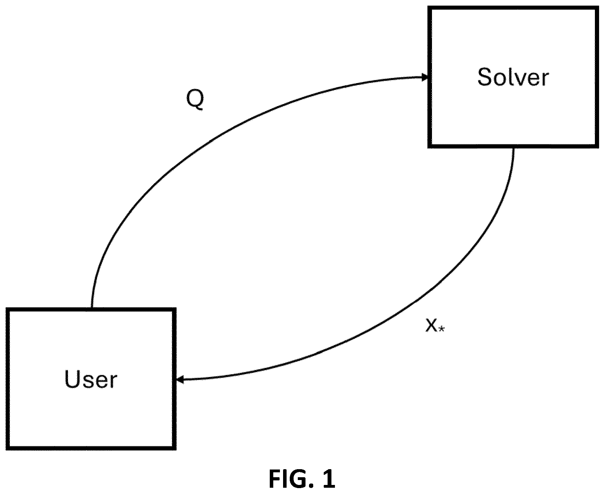

Figure 1 shows an example of QUBO solver system. In said example, the matrix **Q** is sent via Internet to an QUBO solver device that minimizes f(**x**) by using the quadratic function given by the equation (4). The solution to the optimization problem defined in equation (2) is received by the user from the QUBO solver.

The invention could also be applicable to other QUBO problems, for example problems that are not quadratic, with constraints and that are not in binary variable and that can also be mapped using QUBO problems.

The method of the invention also uses a transfer principle. This technique is used to transfer the original optimization problem to an equivalent problem in the encrypted domain, which can be solved securely, and the solution could be obtained locally by the user.

According to this principle, given a function f:X → R and an optimization problem for f(x), the objective is to construct another function f:X' → R that captures the original optimization problem.

In this case, it is called T a transformation of X' into X, with which to transfer the optimization problem of f(**x**) to a similar one for another function f(**x'**), so that solving the problem for f' and the solution of the original problem for f can be obtained using T.

We define the function f' according to:

$$f'(x') := f\big(T(x')\big) \qquad\qquad (5)$$

i.e., the function f' takes identical values as those transformed by T of the function f.

This ensures a connection between the arguments of f and f' that make them optimal. In the case of optimization, minimize or maximize, it turns out that:

$$\operatorname*{argopt}_{x \in X} f(x) \quad \leftarrow T \rightarrow \quad \operatorname*{argopt}_{x' \in X'} f'(x') \qquad\qquad (6)$$

where argopt abbreviates the search for the argument that optimizes (maximizes or minimizes) the function in question.

Therefore, if minimizing (maximizing) g gives $x'_*$ then we know that the minimum (maximum) for f will be obtained as $x_*$ such that: $x_* = T(x'_*)$.

For the present invention, the T transformation has to be construed. In particular, it is intended to use T to transfer the original QUBO problem to another problem of the same type, so T must be linear or affine, i.e. possess an additive term.

In a first set of embodiments, T is a linear transformation characterized by a square matrix P of n×n, which should perform transformations between two vectors $x, x' \in \{0, 1\}^n$:

$$x = Px' \qquad\qquad (7)$$

where **P** serves as the local key generated to transform or encrypt the original problem so that it can be safely sent to the QUBO-solver.

The trivial case in which both vectors $x, x'$ are identically null should be discarded, since they can be connected by any matrix.

In the following, a study about the type of matrix that performs this task, or the mathematical structure, $\mathfrak{E}$, to which the matrix belongs, is performed.

It has to be noted that a trivial identity transformation must be in such a structure, so that the identity matrix of n × n belongs to $\mathfrak{E}$.

It is also required that the encryption procedure can be undone, for decrypting, so we want that if $P \in \mathfrak{E}$ then $P^{-1} \in \mathfrak{E}$.

The composition of two consecutive transformations must belong also to $\mathfrak{E}$, since start and finish spaces are not distinguished.

In addition, if P1, P2, P3 are three operations of $\mathfrak{E}$ , it is indistinguishable to follow path 1,2,3 in the following two steps: $P3(P2P1)$ or $(P3P2)P1$, therefore, an operation of associativity with respect to matrix composition is also required.

In this way, $\mathfrak{E}$ closes a group structure. Expressing equation (7) in terms of its components:

$$x_i = \sum_{j \in I_n} P_{ij} x_j' \qquad\qquad (8)$$

can be interpreted as a one-bit selection of the entire string **x'** assigned to the component of **x,** $x_i$. A collection of switches that enable ($P_{ij}$ = 1) or disable ($P_{ij}$ = 0) each binary variable $\{x_j'\}_j \in I_n$ .

Notice that for every fixed i, $P_{ij}$ are the elements of the i-th row of P. Choosing $P_{ij} = \delta_{jk}$ with an arbitrary k from among the n positions of the row.

Since there is a group structure $\mathfrak{E}$ , each **P** must have an inverse, so if **P** had two equal rows, that matrix would have no inverse. In this way it should be considered one more constraint, in each row there is only one "1" and the rest is "0"; and in each column there is only one "1" and the rest "0".

The $\mathfrak{E}$ structure we are looking for is the group of permutations of n elements $P_n$. It is a finite group containing n! matrices, which correspond to n! possible keys.

In short, $\mathbf{P} \in \{0, 1\}^{n \times n}$ such that in each row and in each column there would be only one element equal to 1 and the rest of the elements would be equal to 0.

Using the transfer principle discussed before, in particular equation (5), the encrypted function f' is defined according to $f'(\mathbf{x'}) := f(P\mathbf{x'})$ and a closed expression can be obtained for the encrypted matrix $\mathbf{Q'} = \mathbf{P^tQP,}$ i.e. **Q** and **Q'** turn out to be congruent matrices.

Given that the columns of **P** form a base of orthonormal vectors, then **P** is orthogonal so that the matrices **Q'** and **Q** are also similar, i.e. $\mathbf{Q'} = \mathbf{P^{-1}QP}$ and share the following list of quantities: range, trace, determinant, characteristic polynomial, eigenvalues, singular values, Jordan form, etc.

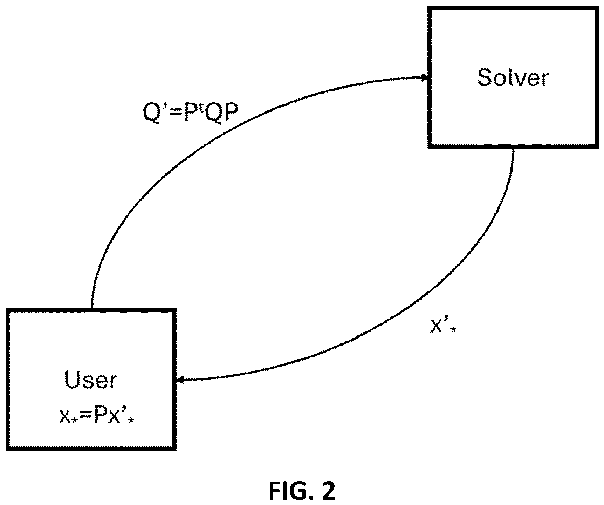

Figure 2 shows an implementation of the method of the invention in a system. In said implementation, the matrix $\mathbf{Q'} = \mathbf{P^tQP}$ is sent via Internet to a QUBO solver device that minimizes f'(**x'**). The encrypted solution to the optimization problem $\mathbf{x'}_*$ is received by the user from the QUBO solver. Then, the user decrypts the solution obtained using the matrix **P** $\in P_n$ as a key, thus obtaining $\mathbf{x}_*$.

Alternatively, it could be possible to relax the condition that P contains in each row and column only one "1" and the rest "0".

It is well known that a matrix S, bi-stochastic,

$$\sum_{i \in In} S_{ij} = 1 = \sum_{j \in In} S_{ij}$$

could connect two discrete probability distributions.

Given $\mathbf{x} \in \{0, 1\}^n$, which is not null, using the number of bits equal to 1 that **x** has, defined by

$$|x| := \sum_{i \in In} x_i$$

we can construct a discrete distribution:

$$\rho(x) := x/|x|$$

Thus, it would be possible to find a bi-stochastic matrix **S** such that $\rho(\mathbf{x}) = \mathbf{S}\rho(\mathbf{x'})$, then

$$x = (|x|/|x'|)\, S\, x'$$

in that case we get:

$$P = (|x|/|x'|)\,S$$

This solution is not useful, as it depends on the norm of the vectors; **P** being bi-stochastic if |**x**|=|**x'**|, i.e. the number of zeros and ones of both vectors is the same.

In case |**x**| ≠ |**x'**| the **P** matrix depends on the norm of the vectors to map.

Alternatively, for directly using a bi-stochastic matrix **P** to map vectors **x, x'**, then, we can decompose **P** using the Birkhoff-von Neumann theorem.

In that case, there is a non-negative collection of real numbers:

$$\{\theta_k\}_{I_m} \qquad m \leq n$$

such that

$$\sum_{k \in I_m} \theta_k = 1$$

and a collection of matrices $\{P_k\}$ of the group $\mathcal{P}_n$ such that

$$P = \sum_{k \in I_m} \theta_k P_k$$

Using **x=Px'**, each component results:

$$x_i = \sum_{k \in Im} \theta_k \sum_{j \in I_n} (P_k)_{ij} x'_j$$

or compactly:

$$x_i = \sum_{k \in Im} \theta_k \, \xi ki$$

In this case, if $\xi ki$ is equal to 0 or 1 for all k, then $x_i = 0, 1$.

But if $\xi_{ki}$ is equal to 0 for some values of k and equal to 1 for others, then $x_i < 1$, contradicting the hypothesis that $x \in \{0, 1\}^n$.

In any case, it cannot be said that in general there exists a bi-stochastic matrix that maps two vectors $\{0, 1\}^n$.

In a second set of embodiments, the transformation T is an additive term, which maps two vectors **x,x'** $\in \{0, 1\}$, as:

$$x = x' \oplus k$$

where $\oplus$ is the binary sum given by the XOR operation.

In this case, $k \in \{0, 1\}^n$ serves as the local key generated to transform or encrypt the original problem so that it can be sent securely to the QUBO-solver.

By repeating the procedure of the first set of embodiments, the shape of the matrix Q' that should be sent to the QUBO-solver is studied.

Using the transfer principle discussed before, in particular in equation (5), the encrypted function f' is defined according to f'(x') := f(x' $\oplus$ k) and a closed expression

$$Q' = \mathcal{C}(Q, k)$$

can be obtained for the encrypted matrix: where

$$\mathcal{C}(\boldsymbol{Q}, \boldsymbol{k}) = \boldsymbol{Q} - 2(\boldsymbol{Q} + \boldsymbol{Q}^t)\, diag(\boldsymbol{k}) + 4diag(\boldsymbol{k})\boldsymbol{Q}diag(\boldsymbol{k}) + diag([\boldsymbol{Q} + \boldsymbol{Q}^t]\boldsymbol{k}$$
$$- 2diag(\boldsymbol{k})diag([\boldsymbol{Q} + \boldsymbol{Q}^t]\boldsymbol{k})diag(\boldsymbol{k})$$

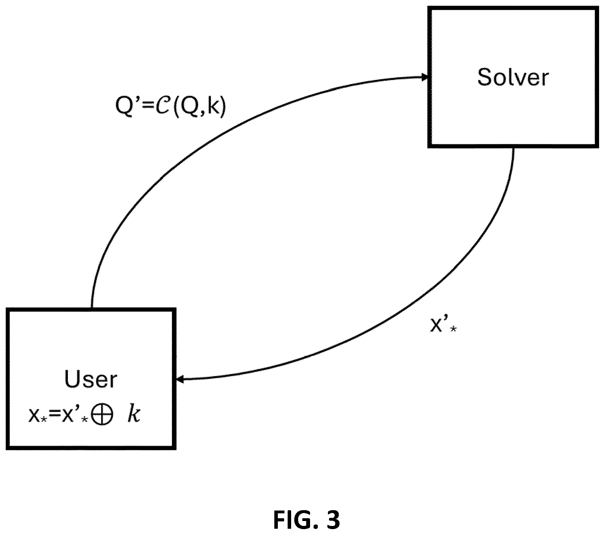

Figure 3 shows an implementation of the method of the invention in a system. In said implementation, the matrix $\boldsymbol{Q'} = \mathcal{C}\,(\boldsymbol{Q}, \boldsymbol{k})$ is sent via Internet to an QUBO solver device that minimizes f'(**x'**). The encrypted solution to the optimization problem $\boldsymbol{x'}_*$ is received by the user from the QUBO solver. Then, the user decrypts the solution obtained using the vector $\boldsymbol{k}$ as a key, thus obtaining $\boldsymbol{x}_*$.

In these examples, the data information protection transformation has been applied only at a level of binary variables of a QUBO problem. This is because it is assumed that the communication channel through which the information of the Q matrix is sent is classical. In this way, it is possible to provide a layer of security to the user that guarantees that the problem to be solved by QUBO-solver will not be exposed, regardless of the classical or quantum nature of the solver.

## Claims

1. A solving cryptography method for QUBO problems by optimizing a function f(x) defined by a matrix Q and a vector p such that

$$f(x) = \sum_{(i,j)\in I_n^2} Q_{ij}\, x_i\, x_j + \sum_{i\in I_n} p_i\, x_i$$

$$f(x) = \boldsymbol{x} \cdot \boldsymbol{Q}\boldsymbol{x}$$

where $\boldsymbol{Q} := Q + diag(p)$
the method comprising the steps of:

   a) encrypting the matrix $\boldsymbol{Q}$ of the function f(**x**) to be optimized;
   b) sending the encrypted version of the matrix **Q'** to a QUBO solver;
   c) receiving an encrypted version of the solution to the QUBO problem $x'_*$, obtained by optimization of the encrypted version of the function f'(x') performed by the QUBO solver; and
   d) decrypting the solution to the QUBO problem, thus obtaining $x_*$

   wherein the encryption is performed by:

   - selecting an encryption matrix P configured perform a linear transformation such that

$$x = Px'$$

   being x the unencrypted variable and x' the encrypted variable, and

$$f'(x') := f(Px')$$

   being f'(x') the encrypted version of the function f(x) to be optimized, and resulting:

$$f'(x') = \boldsymbol{x'} \cdot \boldsymbol{Q'}\boldsymbol{x'}$$

   wherein **Q'** is:

$$\boldsymbol{Q'} = \boldsymbol{P}^t\boldsymbol{Q}\boldsymbol{P}$$

and wherein P is:

- $P_{ij} = \delta_{jk}$ with an arbitrary k from among the n positions of the row, comprising in each row only one "1" and the rest "0"; and in each column only one "1" and the rest "0"; or
- a bistochastic matrix, wherein $|\mathbf{x}| = |\mathbf{x'}|$.

and $x_*$ is obtained by applying:

$$x_* = Px'_*$$

and/or;
- selecting an encryption vector $\mathbf{k} \in \{0, 1\}^n$ such that

$$x = x' \oplus k$$

being x the unencrypted variable and x' the encrypted variable, $\oplus$ the binary sum given by the XOR operation, resulting

$$f'(x') := f(x' \oplus k)$$

being f'(x') the encrypted version of the function f(x) to be optimized, and resulting:

$$f'(x') = x' \cdot Q'x'$$

wherein **Q'** is:

$$Q' = \mathcal{C}(Q, k)$$

with:

$$\mathcal{C}(Q, k) = Q - 2(Q + Q^t)\,diag(k) + 4diag(k)Qdiag(k) + diag([Q + Q^t]k$$
$$- 2diag(k)diag([Q + Q^t]k)diag(k)$$

and $x_*$ is obtained by applying:

$$x_* = x'_* \oplus k$$

2. The method according to claim 1, wherein the encryption matrix P and the encryption vector $\mathbf{k}$ are used together, as:

$$T(x') = (Px') \oplus k$$

3. The method according to claim 1, wherein the encryption with an encryption matrix P is performed iteratively modifying the encryption matrix P at each step.

4. The method according to claim 1, wherein the encryption with an encryption vector $\mathbf{k}$ is performed iteratively modifying the encryption vector $\mathbf{k}$ at each step.

5. The method according to claim 2, wherein the encryption with an encryption matrix P and an encryption vector $\mathbf{k}$ is performed iteratively modifying the encryption matrix P and/or the encryption vector $\mathbf{k}$ at each step.

6. The method according to claim 1, wherein the QUBO solver is an adiabatic, quantic or issing solver.

**EP 4 654 519 A1**

7. A QUBO problems solver system comprising:

   - a QUBO solver configured to solve QUBO problems by optimizing a function f'(x');
   - a processing unit configured to perform the steps of the method according to any of claims 1 to 6, sending an encrypted version of the function to be optimized f'(x') to the solver and receiving an encrypted version of the solution to the QUBO problem $x'_*$.

8. A computer program adapted to perform the steps of the method of any of claims 1 to 6.

9. A computer readable storage medium comprising the computer program of claim 8.

**FIG. 1**

**FIG. 2**

**FIG. 3**

Europäisches
Patentamt

European
Patent Office

Office européen
des brevets

## EUROPEAN SEARCH REPORT

**Application Number**

EP 24 38 2559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAN ZIHAO ZIHAOSHA@BUFFALO EDU ET AL: "Practical Secure Computation Outsourcing", ARXIV.ORG, CORNELL UNIVERSITY LIBRARY, 201 OLIN LIBRARY CORNELL UNIVERSITY ITHACA, NY 14853, vol. 51, no. 2, 20 February 2018 (2018-02-20), pages 1-40, XP058666442, DOI: 10.1145/3158363 * page 3112 - page 3121 * | 1-9 | INV. H04L9/00 G06F17/11 G06N10/00 |
| A | RAMIN AYANZADEH ET AL: "Enigma: Privacy-Preserving Execution of QAOA on Untrusted Quantum Computers", ARXIV.ORG, CORNELL UNIVERSITY LIBRARY, 201 OLIN LIBRARY CORNELL UNIVERSITY ITHACA, NY 14853, 22 November 2023 (2023-11-22), XP091659781, * abstract * * page 1 - page 10 * | 1-9 | |
| A | EP 4 117 223 A1 (TERRA QUANTUM AG [CH]) 11 January 2023 (2023-01-11) * abstract * | 1-9 | TECHNICAL FIELDS SEARCHED (IPC) H04L G06F G06N |

The present search report has been drawn up for all claims

| Place of search | Date of completion of the search | Examiner |
|---|---|---|
| Munich | 28 October 2024 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 38 2559

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | Publication date | Patent family member(s) | Publication date |
|---|---|---|---|
| EP 4117223 A1 | 11-01-2023 | AU 2022204632 A1 | 19-01-2023 |
| | | AU 2024202592 A1 | 09-05-2024 |
| | | CA 3179494 A1 | 05-01-2023 |
| | | CN 115589282 A | 10-01-2023 |
| | | EP 4117223 A1 | 11-01-2023 |
| | | JP 7511919 B2 | 08-07-2024 |
| | | JP 2023009013 A | 19-01-2023 |
| | | KR 20230007242 A | 12-01-2023 |
| | | US 2023027694 A1 | 26-01-2023 |

EPO FORM P0459

For more details about this annex : see Official Journal of the European Patent Office, No. 12/82